# EUROPÄISCHE PATENTSCHRIFT

(11) **EP 0 712 752 B1**
(45) Veröffentlichungstag und Bekanntmachung des Hinweises auf die Patenterteilung: **29.09.1999**
(21) Anmeldenummer: 95111127.7
(22) Anmeldetag: 15.07.1995
(51) Int. Cl.: B60K 15/077, F16B 21/09

(54) **Befestigungseinrichtung für einen Schwalltopf**
Mounting device for a surge chamber
Dispositif de fixation pour une bris-chambre

(30) Priorität: 15.11.1994 DE 4440807
(43) Veröffentlichungstag der Anmeldung: 22.05.1996
(73) Patentinhaber: Bayerische Motoren Werke Aktiengesellschaft, 80788 München (DE)
(72) Erfinder: Bigalke, Manfred, D-85591 Vaterstetten (DE); Kroiss, Hugo, D-82194 Gröbenzell (DE); Sachs, Erwin, D-91781 Weissenburg (DE)

(56) Entgegenhaltungen:
- EP-A- 0 440 541
- EP-B- 0 372 507
- US-A- 5 061 108

## Beschreibung

Die Erfindung bezieht sich auf eine Befestigungseinrichtung für einen Schwalltopf nach dem Oberbegriff des Anspruchs 1.

Zur Befestigung eines Schwalltopfs im Kraftstofftank eines Kraftfahrzeugs sind verschiedene Möglichkeiten bekannt, zum Beispiel:
- Schwalltopf und Tank sind aus dem gleichen Kunststoff ("Tankwerkstoff" - in der Regel PE) hergestellt und können mittels einer Ultraschall- oder Spiegelschweißung direkt miteinander verbunden werden. Das Quellverhalten und die relativ geringe Formstabilität des Tankwerkstoffs wirken sich jedoch nachteilig auf den Schwalltopf aus.
- Der Schwalltopf ist nicht aus Tankwerkstoff hergestellt (Material des Schwalltopfs z. B. POM). Er wird mittelbar über eine separate, mit dem Tank verschweißte Halteplatte mit dem Kraftstofftank verbunden. Die Halteplatte besteht aus Tankwerkstoff, vorzugsweise mit einer Einlage eines formbeständigeren Kunststoffes oder eines Metalls. Damit ergeben sich zwar Vorteile hinsichtlich der Schwalltopfgestaltung, nachteilig ist jedoch, daß mit der Halteplatte ein zusätzliches Bauteil erforderlich ist, das zusätzliche Kosten, höheres Gewicht und eine erhöhte Lage des Schwalltopfes verursacht. Halteplatten ohne Verstärkungseinlagen besitzen eine nur eingeschränkte Festigkeit. Verstärkungseinlagen aber erhöhen die Herstellkosten für die Halteplatten. Wird die Halteplatte mit Metall verstärkt, so gestaltet sich zudem das Recycling des Kunststofftanks schwierig.
   Eine derartige Halteplatte aus Tankwerkstoff ist beispielsweise aus dem ersten Ausführungsbeispiel der EP 0 372 507 B1 sowie aus der EP 0 440 541 A1 bekannt.
- Der Schwalltopf ist am Flansch der Handlochöffnung des Kraftstofftanks befestigt und wird über Federelemente gegen Zentrierflächen am Tankboden gedrückt. Nachteilig ist hierbei die durch die Handlochöffnung begrenzte Schwalltopfgröße. Außerdem besteht nur eine eingeschränkte Festigkeit gegenüber Schwingbelastungen.

Aufgabe der Erfindung ist es, eine Befestigungseinrichtung gemäß der EP 0 372 507 B1 bzw. der EP 0 440 541 A1 weiterzubilden und deren Nachteile zu vermeiden.

Diese Aufgabe wird durch die kennzeichnenden Merkmale des Anspruchs 1 gelöst.
Kerngedanke ist es dabei, die großflächige Halteplatte durch wenigstens zwei im Abstand voneinander angeordnete einzelne und dabei deutlich kleinere Befestigungselemente zu ersetzen. Hierdurch wird eine ebenso breite Abstützbasis erreicht, ohne jedoch den Großteil der Fläche unterhalb des Schwalltopfes mit einer Halteplatte zu belegen. Der Boden des Schwalltopfs, das heißt seine dem Tankboden zugewandte Unterseite, ist abschnittsweise kongruent zu den einzelnen Befestigungselementen ausgeführt. Er muß hierzu entsprechend den kleinflächigen Befestigungselementen auch nur in kleinen Teilbereichen nach innen eingezogen sein. Herden z. B. zwei Befestigungselemente verwendet, die im Interesse einer möglichst breiten Abstützbasis jeweils in Randbereichen des Schwalltopfbodens angeordnet sind, so kann der Schwalltopf zwischen den Befestigungselementen bis auf den Boden des Kraftstofftanks heruntergeführt und in diesem Mittenbereich das Ansaugsieb einer Kraftstoffpumpe möglichst tief angeordnet werden.
Durch die geringe Größe der Befestigungselemente ergibt sich ein geringer Materialaufwand und ein geringes Zusatzgewicht. Damit ist die erfindungsgemäße Befestigungseinrichtung kostengünstig. Gegenüber Befestigungseinrichtungen mit Metalleinlagen ist die erfindungsgemäße Lösung zudem recyclinggerecht.

Bei der aus der EP 0 372 507 B1 bzw. der EP 0 440 541 A1 bekannten Befestigungseinrichtung ist weiter von Nachteil, daß die Halteplatte an zwei Seiten des Schwalltopfs hochgezogen ist, um den Schwalltopf ausschließlich im Bereich seiner Seitenwände zu fixieren. Durch den großen Abstand der korrespondierenden Führungseinrichtungen verringert sich unter Umständen die Belastbarkeit der Verbindung zwischen Kraftstofftank und Schwalltopf, da die Gefahr einer seitlichen Aufspreizung der hochgezogenen Bereiche der Halteplatte besteht. Insbesondere bei unterschiedlichem Quellverhalten der Werkstoffe von Tank und Schwalltopf unter Kraftstoffeinfluß verändert sich der Abstand der gegenüberliegenden hochgezogenen Führungseinrichtungen der Halteplatte gegenüber dem Abstand der Führungseinrichtungen am Schwalltopf, so daß die Belastbarkeit der Verbindung zwischen Kraftstofftank und Schwalltopf verringert wird.
Im Gegensatz zur bekannten Lösung wird gemäß der Weiterbildung der Erfindung nach Anspruch 2 bereits mit einem einzigen Befestigungselement eine sichere Fixierung des Schwalltopfes in allen drei Raumrichtungen erreicht. Diese Befestigungseinrichtung ist somit nicht auf das funktionale Zusammenwirken zweier weit auseinander liegender Elemente einer Führungseinrichtung angewiesen.

Durch den Einsatz von mindestens zwei erfindungsgemäßen Befestigungselementen werden lediglich die erforderliche große Abstützbasis und die notwendige Gesamtfestigkeit sichergestellt.

Wegen der stärkeren Quellung des Tankwerkstoffs im Vergleich zum Werkstoff des Schwalltopfs gemäß Anspruch 3 verändert sich unter der Einwirkung des Kraftstoffs der Abstand zwischen den beiden am Boden des Kraftstofftanks angeordneten Befestigungselementen. Diese unterschiedliche Quellung kann einerseits als Vorspannung zur Fixierung des Schwalltopfs ausgenutzt werden. Zum Toleranzausgleich ist darüber hinaus insbesondere bei größeren Schwalltöpfen die Aufteilung in ein Festlager und ein Loslager erforderlich.

Die Verschweißung der Befestigungselemente mit dem Boden des Kraftstofftanks gemäß Anspruch 4 ist kostengünstig durchzuführen, insbesondere bei Einsatz automatischer Werkzeuge und dabei hoch belastbar. Die in Form einer Fluor-Schicht tankinnenseitig aufgebrachte Diffusionssperre gegen HC-Emissionen wird durch die kleinflächigen Befestigungselemente geringstmöglich beschädigt. Die Verschweißung erfolgt vorzugsweise nach dem Spiegelschweißverfahren, bei dem mittels eines Heizspiegels der Boden des Kraftstofftanks lokal angeschmolzen und das ebenfalls angeschmolzene Befestigungselement an die betreffende Stelle des Tankbodens aufgesetzt wird. Das Zusammenführen der beiden Bauteile im teigigen Zustand bewirkt eine stoffschlüssige Verbindung. Durch das lokal begrenzte Anschmelzen des Tankbodens werden die während der Herstellung im Blasverfahren ausgerichteten Molekülketten des Tankwerkstoffs nur sehr kleinflächig umgeordnet, wodurch sich eine äußerst geringe Verzugsneigung mit nur kleinen Einfallstellen ergibt.

Gemäß Anspruch 5 wird das Quellverhalten des Tankwerkstoffs ausgenutzt, um eine sichere form- und kraftschlüssige Verbindung zwischen Befestigungselement und Schwalltopf zu erreichen. Im Ausgangszustand besteht zwischen den Führungseinrichtungen ausreichend Spiel. Hierdurch wird die Montage erleichtert. Die Fixierung erfolgt zunächst nur durch die Rasteinrichtungen. Damit ist der Schwalltopf beispielsweise während seines Transportes an das Montageband des Kraftfahrzeugherstellers ausreichend fixiert. Nach der Befüllung des Tanks mit Kraftstoff quellen die Führungseinrichtungen der Befestigungselemente innerhalb weniger Stunden derart in den entsprechenden Führungseinrichtungen des Schwalltopfs fest, daß eine sichere, spielfreie Verbindung gegeben ist. Da der Boden des Kraftstofftanks in der Regel ständig mit Kraftstoff bedeckt ist, bleibt diese Fixierung dauerhaft über der Lebensdauer des Kraftfahrzeugs erhalten. Der Hauptteil der Haltekraft wird dabei nicht von den Rasteinrichtungen aufgebracht, sondern resultiert aus dem Übermaß infolge des Quellverhaltens der Befestigungselemente. Damit können die Massenkräfte von Schwalltopf und Kraftstoffpumpe sowie die aus den Schwappbewegungen des Kraftstoffs resultierenden Kräfte sicher aufgenommen werden.

Die Ansprüche 6 und 7 beschreiben eine besonders vorteilhafte Ausführungsform von Befestigungselementen und zugehörigen Aufnahmen im Boden des Schwalltopfs. Die pilzförmige Gestalt der Befestigungselemente garantiert einen sicheren Formschluß zwischen den Befestigungselementen und dem Schwalltopf. Mit der Verwendung gleicher Befestigungselemente für alle Lagerstellen wird die Teilevielfalt reduziert. Werden die Befestigungselemente symmetrisch ausgebildet, vereinfacht sich die automatisierte Montage, da die Befestigungselemente in beliebiger Lage vom Montagewerkzeug aufgenommen werden können.

Ein mögliches Ausführungsbeispiel der Erfindung wird anhand der Zeichnung nachfolgend näher erläutert. Es zeigt:
- Fig. 1: eine Schnittdarstellung einer erfindungsgemäßen Befestigungseinrichtung für einen Schwalltopf in einem Kraftstofftank,
- Fig. 2: eine Schnittdarstellung gemäß der Schnittverlaufslinie II-II in Fig. 1,
- Fig. 3: eine geschnittene Draufsicht auf eine als Festlager ausgebildete Befestigungseinrichtung und
- Fig. 4: eine geschnittene Draufsicht auf eine als Loslager ausgebildete Befestigungseinrichtung.

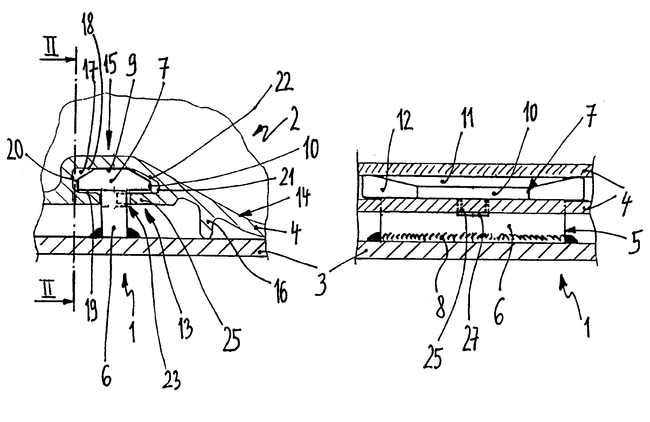

Die Figuren 1 bis 4 zeigen eine erfindungsgemäße Befestigungseinrichtung zwischen einem Kraftstofftank 1 und einem Schwalltopf 2 in unterschiedlichen Schnittdarstellungen. Vom Kraftstofftank 1 und dem Schwalltopf 2 sind jeweils nur kleine Abschnitte des Bodens 3 bzw. 4 dargestellt.

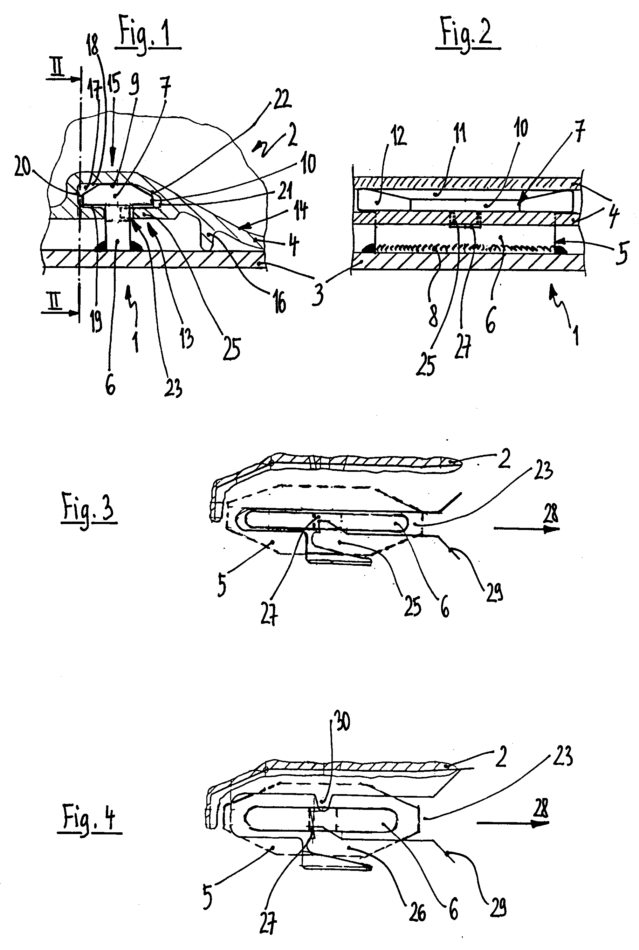

Auf den Boden 3 des Kraftstofftanks 1 ist ein Befestigungselement 5 aufgesetzt. Das Befestigungselement 5 besteht aus einem Fußabschnitt 6 und einem Kopfabschnitt 7. Der Fußabschnitt 6 ist z. B. über eine Spiegelverschweißung mit dem Boden 3 verbunden, was in den Figuren 1 und 2 durch aufgeworfenes Material 8 symbolisiert ist. Der Fußabschnitt 6 besitzt einen rechteckförmigen Querschnitt und geht in den pilzkopfartigen Kopfabschnitt 7 über. Der Kopfabschnitt 7 besteht aus einer im wesentlichen parallel zum Boden 3 verlaufenden Dachfläche 9, vertikal verlaufenden Seitenflächen 10 sowie seitlichen und vorderen Flanken 11 bzw. 12.

Der Boden 4 des Schwalltopfes ist abschnittsweise kongruent zu den Befestigungselementen 5 ausgebildet. Er weist einen nach oben versetzten Bereich 13 auf, der über eine Schrägwand 14 in einen Bereich 15 übergeht, der parallel und unmittelbar benachbart zum Boden 3 des Kraftstofftanks 1 verläuft. Eine vertikale Rippe 16 stützt hierbei den Schwalltopf 2 am Boden 3 des Kraftstofftanks 1 ab. Im nach oben versetzten Bereich 13 des Schwalltopfs 2 ist ein Hohlraum 17 ausgebildet, der den Kopfabschnitt 7 des Befestigungselements 5 aufnimmt. Der Hohlraum 17 wird von einer oberen Begrenzungswand 18 und einer unteren Begrenzungswand 19 eingefaßt, die jeweils parallel zum Boden 3 verlaufen sowie zwei seitlichen Begrenzungswänden 20 und 21, die senkrecht hierzu verlaufen. Die seitliche Begrenzungswand 21 geht hierbei über eine Schrägfläche 22 in die obere Begrenzungswand 18 über. Die untere Begrenzungswand 19 wird von einem Längsschlitz 23 unterbrochen, der der Durchführung des Fußabschnitts 6 des Befestigungselements 5 dient.

Wie insbesondere aus den Figuren 3 und 4 hervorgeht, ist an die untere Begrenzungswand 19 eine Rasteinrichtung angeformt, die aus einem federnden Haken 25 bzw. 26 besteht. Diese Haken 25 bzw. 26 greifen in Aussparungen 27 der Fußabschnitte 6 ein.

Befestigungselement 5 und Hohlraum 17 wirken als Führungseinrichtungen zusammen und dienen der Befestigung des Schwalltopfs 2 im Kraftstofftank 1. Hierbei wird unterschieden zwischen einer Festlager- und einer Loslageranordnung (Figuren 3 bzw. 4). Während gemäß Fig. 3 das Festlager einen formschlüssigen Sitz zwischen Schwalltopf 2 und Befestigungselement 5 erzeugt, dient das Loslager gemäß Fig. 4 dem Toleranzausgleich. Dieser Toleranzausgleich ist insbesodere dann erforderlich, wenn Kraftstofftank 1 und Schwalltopf 2 aus Kunststoffen mit unterschiedlich starker Quellung in Kraftstoff bestehen (z. B. PE für Kraftstofftank 1 und Befstigungselemente 5, POM für den Schwalltopf). Im Falle einer derartigen Werkstoffpaarung ist es außerdem vorteilhaft, zwischen Befestigungselement 5 und Hohlraum 17 ausreichend Spiel vorzusehen. Dieses Spiel wird durch die stärkere Quellung des PE der Befestigungselemente 5 in Kraftstoff nachfolgend aufgehoben und somit eine spielfreie Formschlußverbindung geschaffen.

Der Schwalltopf 2 wird in Richtung der Pfeile 28 auf die Befestigungselemente 5 aufgeschoben. Erweiterte Einführkanäle 29 erleichtern die Montage. Am Ende der Aufschubbewegung rasten die federnden Haken 25 bzw. 26 in die Aussparungen 27 ein. Im Falle des Loslagers gemäß Fig. 4 ist eine zusätzliche Fixierungsnase 30 vorgesehen.

## Patentansprüche

1. Befestigungseinrichtung für einen Schwalltopf in einem Kraftstofftank aus Kunststoff, mit zumindest einem am Boden des Kraftstofftanks angeordneten Befestigungselement, das aus demselben Kunststoff besteht wie der Kraftstofftank,
dadurch gekennzeichnet, daß wenigstens zwei einzelne, im Abstand voneinander angeordnete Befestigungselemente (5) vorgesehen sind, die jeweils eine Fläche überdecken, die wesentlich kleiner ist als die auf den Boden (3) des Kraftstofftanks (1) projizierte Fläche des Schwalltopfes (2) und daß die Befestigungselemente (5) mit dem Boden (4) des Schwalltopfes (2) zusammenwirken.

2. Befestigungseinrichtung nach Anspruch 1,
dadurch gekennzeichnet, daß wenigstens eines der Befestigungselemente (5) den Schwalltopf (2) in allen drei Raumrichtungen fixiert.

3. Befestigungseinrichtung nach Anspruch 1 und/oder Anspruch 2,
dadurch gekennzeichnet, daß Kraftstofftank (1) und Befestigungselemente (5) aus einem Kunststoff bestehen, der unter Kraftstoffeinwirkung sein Volumen vergrößert und daß zumindest ein Befestigungselement (5) als Festlager und zumindest ein Befestigungselement (5) als Loslager mit dem Schwalltopf (2) zusammenwirkt.

4. Befestigungseinrichtung nach wenigstens einem der vorgenannten Ansprüche,
dadurch gekennzeichnet, daß die Befestigungselemente (5) mit dem Boden (3) des Kraftstofftanks verschweißt sind.

5. Befestigungseinrichtung nach wenigstens einem der vorgenannten Ansprüche, wobei sowohl das Befestigungselement als auch der Schwalltopf jeweils wenigstens eine Führungs- und eine Rasteinrichtung aufweisen, derart, daß mit dem Zusammenführen der Führungseinrichtungen auch die Rasteinrichtungen wirksam werden,
dadurch gekennzeichnet, daß Kraftstofftank (1) und Befestigungselemente (5) aus einem Kunststoff bestehen, der unter Kraftstoffeinwirkung sein Volumen vergrößert und daß die Führungseinrichtungen hinsichtlich ihrer Maße und ihrer Form so beschaffen sind, daß nach dem Einrasten der Rasteinrichtungen (24) zwischen den Führungseinrichtungen noch Spiel besteht, das durch die Einwirkung des Kraftstoffs nachfolgend eliminiert wird.

6. Befestigungseinrichtung nach wenigstens einem der vorgenannten Ansprüche,
dadurch gekennzeichnet, daß die Befestigungselemente (5) langgestreckt und im Querschnitt pilzähnlich sind, mit jeweils einem auf den Boden (3) des Kraftstofftanks (1) aufgesetzten Fußabschnitt (6), der in einen Kopfabschnitt (7) mit gegenüber dem Fußabschnitt (6) größerer Breite übergeht und daß der Boden (4) des Schwalltopfs (2) auf seiner dem Boden (3) des Kraftstofftanks (1) zugewandten Seite für jedes Befestigungselement (5) eine langgestreckte Führungseinrichtung aufweist, mit einem Hohlraum (17) für den Kopfabschnitt (7) des Befestigungselements (5) und mit einem unterseitigen Längsschlitz (23) zur Durchführung des Fußabschnitts (6) des Befestigungselements (5).

7. Befestigungseinrichtung nach Anspruch 6, wobei sowohl das Befestigungselement als auch der Schwalltopf jeweils wenigstens eine Führungs- und eine Rasteinrichtung aufweisen und wobei die Rasteinrichtungen jeweils benachbart zu den Führungseinrichtungen angeordnet sind,
dadurch gekennzeichnet, daß die Rasteinrichtungen am Schwalltopf (2) aus Federelementen (federnder Haken 25, 26) im Bereich der Längsschlitze (23) und die Rasteinrichtungen der Befestigungselemente (5) aus fensterartigen Aussparungen (27) in den Fußabschnitten (6) der Befestigungselemente (5) bestehen.

## Claims

1. A device for fastening a swirl pot in a plastic fuel tank, comprising at least one fastening element disposed at the bottom of the tank and made of the same plastic as the tank, characterised in that at least two individual spaced-apart fastening elements (5) are provided and each cover an area much smaller than the area of the swirl pot (2) projected on to the bottom (3) of the tank (1), and in that the fastening elements (5) co-operate with the bottom (4) of the swirl pot (2).

2. A fastening device according to claim 1,
characterised in that at least one fastening element (5) secures the swirl pot (2) in all three directions of space.

3. A fastening device according to claim 1 and/or claim 2,
characterised in that the fuel tank (1) and the fastening elements (5) are made of a plastic which increases in volume when acted upon by fuel, and in that at least one fastening element (5) is a tight bearing and at least one fastening element (5) is a loose bearing cooperating with the swirl pot (2).

4. A fastening device according to at least one of the preceding claims, characterised in that the fastening elements (5) are welded to the bottom (3) of the fuel tank.

5. A fastening device according to at least one of the preceding claims, wherein both the fastening element and the swirl pot have at least one guide means and one locking means, such that when the guide means are brought together, the locking means also become operative, characterised in that the fuel tank (1) and the fastening elements (5) are made of a plastic which increases in volume when acted upon by fuel and in that the guide means are dimensioned and shaped so that after the locking means (24) engage there is still a clearance between the guide means which is subsequently eliminated by action of the fuel.

6. A fastening device according to at least one of the preceding claims, characterised in that the fastening elements (5) are elongate and mushroom-shaped in cross-section, and each have a foot portion (6) placed on the bottom (3) of the tank (1) and merging into a head portion (7) wider than the foot portion (6), and in that the bottom (4) of the swirl pot (2) has an elongate guide device for each fastening element (5) on the side facing the bottom (3) of the tank (1), with a cavity (17) for the head portion (7) of the fastening element (5) and with a slot (23) underneath for receiving the foot portion (6) of the fastening element (5).

7. A fastening device according to claim 6, whereby the fastening element and the swirl pot each have at least one guide means and one locking means, wherein the locking means are each disposed adjacent the guide means,
characterised in that the locking means on the swirl pot (2) comprise spring elements (resilient hooks 25, 26) in the region of the slots (23) and the locking means on the fastening elements (5) comprise window-like recesses (27) in the foot portions (6) of the fastening elements (5).

## Revendications

1. Dispositif de fixation pour un pot de brise-jet dans un réservoir de carburant en matière plastique, avec au moins un élément de fixation disposé sur le fond du réservoir de carburant, élément de fixation qui est réalisé dans la même matière plastique que le réservoir de carburant,
caractérisé en ce qu'
• au moins deux éléments de fixation différents (5) disposés à une certaine distance l'un de l'autre, sont prévus, éléments de fixation (5) qui recouvrent respectivement une surface sensiblement plus étroite que la surface du pot de brise-jet (2) projetée sur le fond (3) du réservoir de carburant (1), et
• les éléments de fixation (5) coopèrent avec le fond (4) du pot de brise-jet (2).

2. Dispositif de fixation selon la revendication 1,
caractérisé en ce que
au moins l'un des éléments de fixation (5) fixe le pot de brise-jet (2) dans les trois directions.

3. Dispositif de fixation selon la revendication l et/ou la revendication 2,
caractérisé en ce que
• le réservoir de carburant (1) et les éléments de fixation (5) sont réalisés en une matière plastique dont le volume augmente sous l'action du carburant, et
• au moins un élément de fixation (5) coopère en tant que montage fixe et au moins un élément de fixation (5) coopère en tant que montage lâche, avec le pot de brise-jet (2)

4. Dispositif de fixation selon au moins l'une des revendications précédentes,
caractérisé en ce que
les éléments de fixation (5) sont soudés avec le fond (3) du réservoir de carburant.

5. Dispositif de fixation selon au moins l'une des revendications précédentes, dans lequel aussi bien l'élément de fixation que le pot de brise-jet présentent respectivement au moins un système de guidage et un système d'encliquetage, d'une manière telle que les systèmes d'encliquetage sont aussi opérationnels avec la jonction des systèmes de guidage,
caractérisé en ce que
• le réservoir de carburant (1) et les éléments de fixation (5) sont réalisés en une matière plastique dont le volume augmente sous l'effet du carburant, et
• les systèmes de guidage sont réalisés, en ce qui concerne leur masse et leur forme, d'une manière telle qu'après l'encliquetage des systèmes d'encliquetage (24) entre les systèmes de guidage, il y ait encore un jeu qui est éliminé ensuite par l'action ultérieure du carburant.

6. Dispositif de fixation selon au moins l'une des revendications précédentes,
caractérisé en ce que
• les éléments de fixation (5) sont allongés et ont, en section transversale, une forme analogue à celle d'un champignon, avec respectivement une section de pied (6) qui est posée sur le fond (3) du réservoir de carburant (1), section de pied (6) qui se transforme en une section de tête (7) qui présente une largeur plus grande que la section de pied (6), et
• le fond (4) du pot de brise-jet (2) présente, sur sa face tournée vers le fond (3) du réservoir de carburant (1) et pour chaque élément de fixation (5), un dispositif de guidage allongé, avec une cavité (17) pour la section de tête (7) de l'élément de fixation (5) et avec une fente longitudinale (23) située en dessous pour le passage de la section de pied (6) de l'élément de fixation (5).

7. Dispositif de fixation selon la revendication 6, dans lequel l'élément de fixation comme aussi le pot de brisejet présentent respectivement au moins un système de guidage et un système d'encliquetage, et dans lequel les systèmes d'encliquetage sont respectivement disposés au voisinage des systèmes de guidage,
caractérisé en ce que
les systèmes d'encliquetage sur le pot de brise-jet (2) se composent d'éléments élastiques (crochets à ressort 25, 26) dans la zone des fentes longitudinales (23), et les systèmes d'encliquetage des éléments de fixation (5) se composent d'évidements (27) en forme de fenêtres dans les sections de pied (6) des éléments de fixation (5).
